# EUROPEAN PATENT SPECIFICATION

(11) **EP 1 090 069 B1**
(45) Date of publication and mention of the grant of the patent: **28.07.2004**
(21) Application number: 99922640.0
(22) Date of filing: 26.05.1999
(51) Int. Cl.: C08L 25/04, B60C 1/00

(54) **PUNCTURE-RESISTING TIRE COMPOSITION AND ITS COATING METHOD**
PERFORATIONSBESTÄNDIGE REIFENZUSAMMENSETZUNG UND BESCHICHTUNGSVERFAHREN DAFÜR
COMPOSITION POUR PNEUS RESISTANTE AUX CREVAISONS ET PROCEDE D'APPLICATION DE LADITE COMPOSITION

(30) Priority: 30.05.1998 KR 9820010
(43) Date of publication of application: 11.04.2001
(73) Proprietor: Kim, Ho Kyun, Kangnam-ku, Seoul 135-010 (KR)
(72) Inventor: KIM, Ho Kyun, Kangnam-ku, Seoul 135-010 (KR); WON, Seung Ho, Seo-ku, Taejeon-city 302-171 (KR)
(74) Representative: Nash, David Allan
(86) International application number: PCT/KR1999/000261
(87) International publication number: WO 1999/062998

(56) References cited:
- EP-A1- 0 302 400
- US-A- 4 109 695
- DATABASE WPI 01 March 1979 Derwent Publications Ltd., London, GB; AN 1979-27112B(14) & JP 54 027 105 A (BRIDGESTONE CORP.)

## Description

### Technical Field

This invention relates to a puncture-resisting tire composition and its coating method and more particularly, to the puncture-resisting tire composition suitable for application in a tubeless tire, and its hot-melting coating method for a tire.

### Background Art

Generally, tires are divided into a tubeless tire and a tube-housed tire and recently, a majority of vehicles have been equipped with a tubeless tire except for some freight cars or omnibuses.

In case where nails are embedded in the tubeless tire, it is unlikely that its internal pressure becomes lessen within a short time of period. Nonetheless, the tubeless tire will face the same puncture problems as in the tube tire, under the following circumstances where (1) with the gradually decreased air in the tubeless tire, a driver is operating his car whose tire air is completely decreased, (2) some nails struck in the tubeless tire are slipped during a high-speed, or (3) any vehicles are driving on the place where some gimlet-like materials with pointed tips are embedded. If this happens, a fatal accident may be unavoidable, or a driver has to repair the damaged tire for his re-driving.

A variety of methods, which may be classified into the following three types, have been disclosed so as to avoid the risks associated with such tire puncture hitherto:

The first type has disclosed a method of letting a driver be known that a tire puncture is responsible for gradual decrease of air since the driver using the tubeless tire, can not immediately recognize the puncture (Korean laid-open Nos. 97-033989/97-020487):

The second type is that even if there is a flat tire, a driver can continuously move his vehicle to an appropriate place with additional means available (U.S. Patent No. 499893, Korean laid-open No. 92-000517, U.S. Patent No. 415468, and Korean laid-open No. 91-014246); and,
the third type is to fundamentally prevent a flat tire in such a manner that the puncture-resisting composition is sealed to a tire.

Among these methods, the third type is further explained.

The conventional methods have disclosed the puncture-resisting tire composition as follows:

A method in which the inside wall of tire's crown is coated with a coal tar pitch or a mixture of both petroleum pitch and polyisobutylene (Japanese publication No. 31-9489);

A method in which the inside wall of tire's crown is coated with a viscous rubber and then an air-flowing scrap of cloth such as a ring-shaped texture is combined into the rubber (Japanese publication No. 35-17402);

A method in which a hive structure of tire is compactly coated with a viscous material containing a mixture of partially cross-linked polybutene, process oil and butyl rubber to form a sealing layer (Japanese publication No. 34-1095); and,

A method of using a sealant consisting of an ethylene-propylene rubber, polybutene and a filler (Japanese publication No. 50-39458).

However, these methods or some sealant for prevention of the flat tire have recognized some disadvantages in that (1) the fluidity of puncture-resisting materials may occur at the cooling-flowing conditions or at a very high temperature, (2) the centrifugal force generated from the tire during a high speed driving has centered a sealant onto the central site of crown in a tire, (3) excess use of solvent is involved in human's safety problems and harmful environment in worksite, and (4) the sealing power of related materials is not desirable for their actual application.

To overcome the aforementioned drawbacks, the Korean publication No. 82-652 has disclosed a solvent-type sealant composition, wherein one solution comprising a butyl rubber dissolved in a solvent, which is mixed with the other solution derived from polybutene, styrene-butadiene rubber and cross-linking agent, is sprayed to a tire rubber for curing, thus forming a sealing layer.

Since at least more than one solvent is employed in such sealant, however, the evaporation of solvent contained in a highly viscous polymer should require more prolonged time of period, even though a sealing material is coated at the thickness of 1 mm. Therefore, the above patent has proposed that a sealant can be applied to a tire at the thickness of 1 ∼ 3mm but its actual application appears to be difficult and unproductive, despite the possibility that any sample manufacture may be available.

Actually, a tire is manufactured in such a manner that a silicon-based mold release agent is coated in its inside, followed by the addition of large amounts of an anti-additive and anti-blocking agent. However, if the conventional sealant using a solvent or water as diluent is applied to the tire, a proper adhesiveness in a tire cannot be achieved, or a tire may be cracked owing to poor adhesiveness, even if adhered. To comply with this matter, the coated surface of mold release agent needs to be completely eliminated, along with more prolonged time of period and enormous expenditures, thus being uneconomical as a consequence.

In addition, the use of solvent-type paints using organic solvent may lead to severe building fire or air contamination.

With these problems that the conventional methods have encountered, the conventional sealant have yet to be commercialized for many years due to their poor adaptability and application in the industrial field.

### Disclosure of Invention

Therefore, an object of this invention is to provide a puncture-resisting tire composition which has excellent combination of properties in that (1) the adhesiveness of an sealant is further enhanced in preventing a puncture of tire, (2) the flow of the composition into a crown site of tire can be prevented during a high-speed driving, and (3) any safety problem and harmful environment associated with excess use of solvent at worksite can be also prevented.

Another object of this invention is to provide a puncture-resisting composition which can fundamentally improve a poor productivity due to more extended workability in line with the evaporation of solvent during sealing process.

Further object of this invention is to provide a puncture-resisting composition as a 100% solid form which can easily applied on a coating material such as a mold release agent present in the inside of tire during manufacture.

Further object of this invention is to provide a puncture-resisting composition containing no volatile substance which can prevent tire's damage caused by the remaining volatile substance and internal fluidity, together with a coating method to dissolve it in a very high temperature.

### Brief Description of the Drawings

FIG. 1 is a sectional view showing that a puncture-resisting composition is sealed onto a tire,
FIG. 2 is a schematic view showing the puncture-resisting principle of tire coated with the puncture-resisting composition.

### Best Mode for Carring out the Invention

To achieve the above objectives, the puncture-resisting tire composition of this invention is characterized by a composition comprising a thermoplastic elastomer, which is styrene-based block copolymer, as an active ingredient, unlike the conventional solvent-based rubber or emulsifier-based rubber containing some volatile substance, and its viscous elasticity layer is applied onto the inside of tire via a hot-melting process at a very high temperature.

According to this invention, the puncture-resisting tire composition comprises 100 weight parts of a styrene-based thermoplastic elastomer, 110 ∼ 190 weight parts of an adhesive agent, 80 ∼ 140 weight parts of a liquid plasticizer and 2 ∼ 20 weight parts of an additive.

This invention is explained in more detail as set forth hereunder.

Each component comprising the puncture-resisting tire composition is explained in more detail as follows:

### (1) First composition: Styrene-based thermoplastic elastomer

The detailed examples of such compound include a styrene-butadiene-styrene block copolymer (hereinafter referred to as "SBS"), a styrene-isoprene-styrene block copolymer (hereinafter referred to as "SIS") and a styrene-ethylene-butylene-styrene block copolymer (hereinafter referred to as "SEBS"). Even though these thermoplastic rubbers do not need to be cured, their strength has nearly same properties as some curing rubbers, while maintaining their elasticity up to -80°C with better ozone resistance and chemical proofing.

### (2) Second composition: Adhesive agent

The adhesive agent is a resin intended to provide the styrene-based thermoplastic resin with a tackiness, and its detailed examples include a petroleum resin, a rosin, a rosin ester, a coumaron-indene resin, an acrylic resin with a high molecular weight, a ketone resin, a saturated aliphatic hydrocarbon-based resin and paraffin wax. The common adhesive agent as a solid form, which is mixed with a styrene-based resin, demonstrates a very high tackiness.

### (3) Third composition: Liquid plasticizer

Examples of the liquid plasticizer include a process oil, polybutene and other mineral oil. These materials serves to lower the viscosity, increase the elongation and facilitate the corresponding process.

### (4) Fourth composition: Additive

Examples of the commonly used additives in the puncture-resisting tire composition include an anti-oxidant, a wetting agent or a defoaming agent. These additives serve to prevent the discoloration of a final product and changes in physical property owing to oxidation at a very high temperature during heating and melting process.

When a tackifier is intended for manufacture based on the above chemical composition, a variety of desired products can be produced by changing the mixing ratio of each component which may affect various properties such as tensile strength, elongation, tackiness, adhesiveness and melting point.

The puncture-resisting tire composition comprises 100 weight parts of the first composition, 110 ∼ 190 weight parts of the second composition, 80 ∼ 140 weight parts of the third composition and 2 ∼ 20 weight parts of the fourth composition.

If the content of the second composition is less than 110 weight parts in proportion to 100 weight parts of styrene-based thermoplastic elastomer, a tackiness becomes reduced but in case of exceeding 190 weight parts, there is a weak sealing layer and insufficient elasticity.

Further, if the content of the third composition is less than 80 weight parts in proportion to 100 weight parts of styrene-based thermoplastic elastomer, there is a reduced elongation and increased hardness: in case of exceeding 140 weight parts, the elongation is extremely high but strength and hardness becomes reduced.

To achieve the objectives of this invention, it is preferred that a sealant should be extended until the whole body of a nail, so infiltrated, is fully covered: when a nail is slipped, a sealant is simultaneously flowed to occupy the corresponding gap. It is revealed that the puncture-resisting tire composition of this invention can maintain the sealing state, even when the whole body of a nail, so infiltrated, is not fully covered.

To this end, the puncture-resisting tire composition of this invention having a larger tackiness and elongation is more advantageous but a higher elongation may lead to a poor tensile strength and excessive tackiness. Notwithstanding this, such problems may be experimentally overcome in a simple manner.

Meantime, the puncture-resisting tire composition of this invention has a solid form fundamentally; in other words, the above composition is not applied to a tire in such a manner to be dissolved in water or solvent, being evaporated. Thus, the coating method of sealing solution onto a tire is totally different from the common sealing solution.

The process designed to apply the puncture-resisting tire composition of this invention to a tire is performed in such a manner that a sealing solution, so prepared, is flowed into the inside of tire in a melting state (about 200 ∼ 250°C), without special treatment or sprayed under a high pressure for its easy sealing in the inside of tire. Then, when a sealant with a strong adhesiveness is compactly attached to a tire, proper adhesion can be achieved irrespective of any mold release agent used for the manufacturing process of tire, thus obtaining more several-fold adhesiveness than the conventional method.

The thickness of a sealing layer in the puncture-resisting composition, so applied and formed in a tire, may vary depending on the work temperature and objective but it is preferred that in consideration of its adhesiveness, the thickness of a sealing layer is in the range of I ∼ 5mm, more preferably in the range of 2 ∼ 3mm.

If a sealing layer is an extremely thick, the centrifugal force generated in the tire during a high speed driving has led a sealing composition to the central site of crown in a tire and may affect the weight of tire.

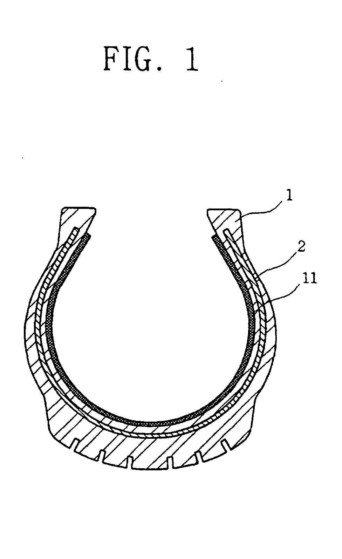

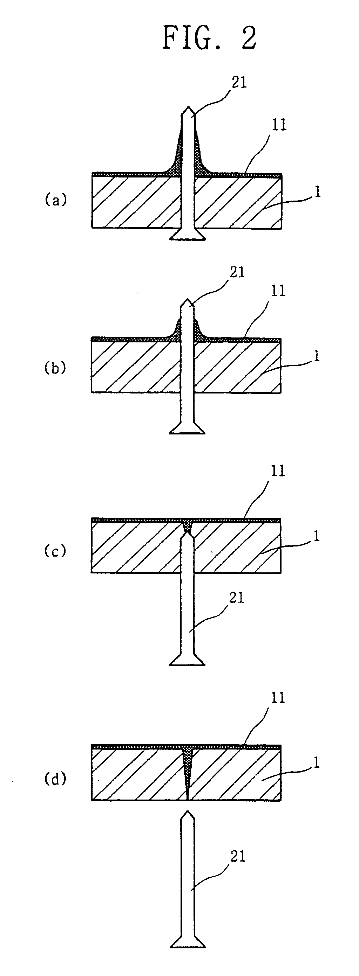

FIG. 1 is a sectional view showing that the puncture-resisting composition is attached to a tire, FIG. 2 is a puncture-resisting principle of tire.

The puncture-resisting composition of this invention is explained based on the following principle in a subsequent manner:

When a nail is embedded in a tire, its whole body or the neighboring area is covered with a sealant as represented in FIG 2 (a), even when pierced. As represented in FIG 2 (b), when the nail is beginning to slip, the sealant of this invention is simultaneously being flowed down. As represented in FIG. 2 (c), the nail is slipped in the middle of tire, the sealant is simultaneously accompanied by the nail. Finally, as represented in FIG. 2 (d), the sealant is simultaneously pressed out of tire together with the nail and then all spaces of the nail are occupied by the sealant. Thus, after the nail was completely removed from a tire, the hole generated by the nail is completely re-occupied by the elasticity of rubber independently.

Based on such principle, the puncture-resisting composition of this invention can maintain its own sealing property for a long time of period, since it can completely reoccupy the gap, when a nail is removed.

This invention is explained by the following Examples in more detail as set forth hereunder.

### Example 1

The puncture-resisting tire composition was prepared in such a manner that a mixture of 40 weight parts of rosin, 35 weight parts of rosin ester, 100 weight parts of aliphatic hydrocarbon-based polymer (PICOFALE#95, Hercules Co.), 80 weight parts of process oil, and 3 weight parts of additive (IRGANOX#1076, Ciba-Geigy Co.) was added to 100 weight parts of SBS, followed by its stirring and homogenization process.

### Example 2

The puncture-resisting tire composition was prepared in such a manner that a mixture of 90 weight parts of petroleum resin, 90 weight parts of rosin ester, 90 weight parts of process oil, and 5 weight parts of additive (IRGANOX#1076, Ciba-Geigy Co.) was added to 100 weight parts of SEBS, followed by its stirring and homogenization process.

The inside of a tire, which was treated with a mold release using silicon oil and talc, was sealed with the puncture-resisting composition, so prepared from Examples 1 and 2, at the thickness of about 2mm by a hot-melting flowing process.

The sealed tire installed to a rim was under air infusion and then the following tests was performed at the pressure of 34 psi (pound per inch square) (0.234 N/mm²):

To investigate the air leakage of tire, 20 nails (length: 8cm, thickness: 4mm) were embedded at the side portion of tire including the tread site and placed in water. However, no air leakage in a tire was observed. When an automobile with the sealed treated tire was driven at the speed of 80km/mph, 100km/mph and 120km/mph for 20 minutes each at Express Highway, there was no air leakage in the tire.

After driving, the test after removing all of the 20 nails showed that there was no air leakage. Further, the air leakage tests at a refrigerator (-30°C) and an oven (80°C) after 2 hours, no air leakage in a tire was observed.

After a 5-day test, there was no air leakage in a tire.

After removing all nails from the tire, the results of actual driving tests at Express Highway and in downtown road showed that there was no air leakage in the tire, except for some abrasion in tire only.

### Example 3

The puncture-resisting tire composition was prepared in such a manner that a mixture of 70 weight parts of rosin, 110 weight parts of aliphatic hydrocarbon-based polymer (PICOTAC#95, Hercules Co.), 80 weight parts of polybutene, and 2 weight parts of anti-oxidant (IRGANOX#1076, Ciba-Geigy Co.) was added to 100 weight parts of SBS, followed by its stirring and homogenization process.

A tire was sealed with each of puncture-resisting tire composition, so prepared, at the thickness of about 2.0mm in the same manner as Example 1 and 2.

The following tests were performed under the same pressure as Example 1. To investigate the air leakage of tire, 40 nails (length: 8cm, thickness: 4mm) were embedded at the crown and shoulder portions of tire and placed in water. However, no air leakage in a tire was observed.

Further, the tire was placed at an oven (80°C) for 2 hours and when 10 nails was removed, it was revealed that the sealing state of tire was perfect, since some sealed solution was flowed out of the removed hole of nails. Also, no air leakage in a tire was observed.

An automobile equipped with the above tire was driven at Express Highway at the speed of 110km/mph and in downtown road for 1 week, respectively. After driving. the remaining 30 nails were removed to investigate the air leakage of tire but no change was observed. After a 1-week parking. there was no air leakage of tire. Further, when the tread portion of tire was pierced with a gimlet (diameter: 10mm), no air leakage in a tire was observed.

### Example 4

The puncture-resisting tire composition was prepared in such a manner that a mixture of 85 weight parts of rosin ester and rosin, 100 weight parts of aliphatic hydrocarbon-based polymer (HICORES c-1100, Kolon Co.), 62 weight parts of process oil and polybutene and 3 weight parts of additive (IRGANOX#1076, Ciba-Geigy Co.) was added to 110 weight parts of SEBS.

### Example 5

The puncture-resisting tire composition was prepared in such a manner that a mixture of 150 weight parts of rosin, 25 weight parts of acrylic resin in solid form, 80 weight parts of process oil and 2 weight parts of anti-oxidant (IRGANOX#1076, Ciba-Geigy Co.) was added to 100 weight parts of SEBS.

A tire was sealed with each of puncture-resisting tire composition, so prepared from Examples 4 and 5, at the thickness of 1.5 ∼ 2.0mm in the same manner as Example 1 and 2, followed by housing the tire to a rim. The following tests were performed at the same pressure as Example 1.

To investigate the air leakage of tire, an automobile equipped with the puncture-resisting tire was driven at the speed of 50km/mph through a board (thickness: 2cm, width: 20cm, length: 2m) embedded with each nail (length: 7mm, thickness: 4mm) at each distance interval of 20cm, which was turned inside out. However, no air leakage in a tire was observed.

After a 1-week test, there was no air leakage in a tire. Further, the air leakage tests at a refrigerator (-30°C) and an oven (80°C) after 2 hours, no air leakage in a tire was observed.

As mentioned in the above, an sealant of this invention, so prepared by using a thermoplastic elastomer, which is a styrene-based or its similar block copolymer, as an active ingredient instead of a solvent-based rubber, including an adhesive agent, liquid plasticizer and other additive, has the following advantages in that (1) unlike the conventional sealant, the sealant of this invention has no cooling and/or fluidity problem, (2) the sealant of this invention has significantly shortened the prolonged time of solvent's evaporation, (3) prior to coating the sealant of this invention to a tire. there is no need to separately remove a mold release agent, anti-additive and anti-blocking agent in a tire, (4) an excellent puncture-resisting effects of the composition can be demonstrated immediately after its sealing on tire, and (5) the sealant of this invention can be easily attached to a newly generated tire by a direct high-pressure spray and flowing method, thus proving to be very practical.

### Industrial Application

In addition, the puncture-resisting tire composition of this invention may be applicable to all tires of vehicles such as tubeless tires, tube tires, motorcycle tires, bicycle tires, and industrial tire. In this context, it is needless to say that these applications are in the scope of the claims as specified hereunder.

## Claims

1. A puncture-resisting tire composition comprising 100 weight parts of a styrene-based thermoplastic elastomer, 110 ∼ 190 weight parts of an adhesive agent, 80 ∼ 140 weight parts of a liquid plasticizer and 2 ∼ 20 weight parts of an additive.

2. The puncture-resisting tire composition according to claim 1, wherein one or more of said styrene-based thermoplastic elastomer is/are selected from the group consisting of styrene-butadiene-styrene block copolymer, styrene-isoprene-styrene block copolymer, and styrene-ethylene-butylene-styrene block copolymer.

3. The puncture-resisting tire composition according to claim 1, wherein one or more of said adhesive agents is/are selected from the group consisting of petroleum resin, rosin, rosin ester, coumaron-indene resin, acrylic resin with a high molecular weight, ketone resin, saturated aliphatic hydrocarbon-based resin, and paraffin wax.

4. The puncture-resisting tire composition according to claim 1, wherein one or more of said liquid plasticizer is/are selected from the group consisting of a process oil, polybutene and mineral oil.

5. The puncture-resisting tire composition according to claim 1, wherein one or more of said additives is/are selected from the group consisting of an anti-oxidant, a wetting agent and a defoaming agent.

6. A process for coating the puncture-resisting tire composition, wherein the puncture-resisting tire composition according to claim 1 is applied, in a melting state, to the inside of tire via high-pressure spray or flowing method.

7. A process for coating the puncture-resisting tire composition according to claim 6, wherein the coating process of said puncture-resisting tire composition is made in such a manner that the thickness of the coating layer is in the range of 1 ∼ 5mm.

## Patentansprüche

1. Durchstoßfeste Reifenzusammensetzung, umfassend 100 Gewichtsteile thermoplastisches Elastomer auf Styrolbasis, 110 bis 190 Gewichtsteile Klebemittel, 80 bis 140 Gewichtsterle flüssigen Weichmacher und 2 bis 20 Gewichtsteile Additiv

2. Durchstoßfeste Reifenzusammensetzung nach Anspruch 1, wobei ein oder mehrere von den thermoplastischen Elastomeren auf Basis Styrol ausgewahlt sind aus der Gruppe Styrol-Butadien-Styrol-Blockcopolymer, Styrol-Isopren-Styrol-Blockcopolymer und Styrol-Ethylen-Butylen-Styrol-Blockcopolymer.

3. Durchstoßfeste Reifenzusammensetzung nach Anspruch 1, wobei ein oder mehrere von den Klebemitteln ausgewählt sind aus der Gruppe petrochemisches Kolophonium, Kolophoniumester, Cumaron-Inden-Harz, hochmolekulares Acrylharz, Ketonharz, Harz auf Basis gesättigten aliphatischen Kohlenwasserstoffs und Paraffinwachs.

4. Durchstoßfeste Reifenzusammensetzung nach Anspruch 1, wobei ein oder mehrere von den Flüssigweichmachern ausgewählt sind aus der Gruppe Prozessöl, Polybuten und Mineralöl

5. Durchstoßfeste Reifenzusammensetzung nach Anspruch 1, wobei ein oder mehrere von den Additiven ausgewählt sind aus der Gruppe Antioxidanz, Benetzungsmittel und Entschäumungsmittel.

6. Verfahren zum Schichten der durchstoßfesten Reifenzusammensetzung, wobei die durchstoßfeste Reifenzusammensetzung nach Anspruch 1 im Schmelzzustand auf die Innenseite des Reifens durch Hochdrucksprühen oder Fließverfahren aufgebracht wird.

7. Verfahren zum Schichten der durchstoßfesten Reifenzusammensetzung nach Anspruch 1, wobei das Beschichtungsverfahren der durchstoßfesten Reifenzusammensetzung in einer Weise erfolgt, dass die Dicke der Beschichtungsschicht im Bereich von 1 bis 5 mm liegt.

## Revendications

1. Composition pour pneu résistant aux crevaisons comprenant 100 parties en masse d'un élastomère thermoplastique à base de styrène, 110 à 190 parties en masse d'un agent adhésif, 80 à 140 parties en masse d'un plastifiant liquide et 2 à 20 parties en masse d'un additif.

2. Composition pour pneu résistant aux crevaisons selon la revendication 1, où un ou plusieurs dudit élastomère thermoplastique à base de styrène est/sont choisi(s) dans le groupe constitué par un copolymère bloc styrène-butadiène-styrène, un copolymère bloc styrène-isoprène-styrène et un copolymère bloc styrène-éthylène-butylène-styrène.

3. Composition pour pneu résistant aux crevaisons selon la revendication 1, où un ou plusieurs desdits agents adhésifs est/sont choisi(s) dans le groupe constitué par une résine de pétrole, de la colophane, de l'ester de colophane, une résine coumarone-indène, une résine acrylique à masse moléculaire élevée, une résine cétonique, une résine à base d'hydrocarbure aliphatique saturé et une cire de paraffine.

4. Composition pour pneu résistant aux crevaisons selon la revendication 1, où un ou plusieurs dudit plastifiant liquide est/sont choisi(s) dans le groupe constitué par de l'huile à usiner, du polybutène et de l'huile minérale.

5. Composition pour pneu résistant aux crevaisons selon la revendication 1, où un ou plusieurs desdits additifs est/sont choisi(s) dans le groupe constitué par un anti-oxydant, un agent mouillant et un agent démoussant.

6. Procédé de revêtement par la composition pour pneu résistant aux crevaisons, dans lequel la composition pour pneu résistant aux crevaisons selon la revendication 1 est appliquée, à l'état fondu, sur la partie intérieure d'un pneu par une méthode de pulvérisation sous haute pression ou par une méthode d'arrosage.

7. Procédé de revêtement par la composition pour pneu résistant aux crevaisons selon la revendication 6, dans lequel le procédé de revêtement par ladite composition pour pneu résistant aux crevaisons est exécuté de telle manière que l'épaisseur de la couche de revêtement soit dans l'intervalle de 1 à 5 mm.
